# DEMANDE DE BREVET EUROPEEN

(11) **EP 0 737 977 A1**
(43) Date de publication de la demande: **16.10.1996**
(21) Numéro de dépôt: 96400676.1
(22) Date de dépôt: 28.03.1996
(51) Int. Cl.: G11B 27/00, G11B 27/10

(54) **Lecteur de supports d'informations numériques tel qu'un disque compact**

(30) Priorité: 11.04.1995 FR 9504345
(71) Demandeur: FILLONY LIMITED, Wan Chai (HK)
(72) Inventeur: Takahashi, Hiroshi, Taikoo Shing (HK)
(74) Mandataire: Plaçais, Jean-Yves

(57) **Abrégé**

Un lecteur comprend des moyens de lecture matérielle du support (3) et des moyens de commande (4) comprenant des moyens de gestion (5) pour mémoriser les "table des matières" des supports (2), des moyens de pilotage de lecture (6), propres à faire lire par les moyens de lecture (3) une plage "en cours" du support, et des moyens de programmation de séquence (8), permettant la saisie par l'usager d'une suite ordonnée et son stockage dans une mémoire de séquence (10). Les moyens de programmation (8) sont séparés des moyens de pilotage (6), et la mémoire (9) des moyens de gestion (5), ainsi que la mémoire de séquence (10) sont conjointement accessibles aux moyens de programmation (8) ainsi qu'aux moyens de pilotage (6), de sorte que les moyens de programmation (8) peuvent en outre être rendus opératoires pendant le fonctionnement des moyens de pilotage (6), pour permettre de modifier le contenu de ladite mémoire de séquence (10).

## Description

L'invention concerne les lecteurs de supports d'informations numériques, tels que des disques compacts.

Cette invention concerne plus particulièrement la partie propre à la programmation de ces lecteurs, lesquels comprennent généralement :
- des moyens de lecture matérielle du support,
- des moyens de commande comprenant
   . des moyens de gestion de support, propres à mémoriser des données lues formant "table des matières" identifiant l'ensemble des plages d'informations présentes sur au moins un support,
   . des moyens de pilotage de lecture, propres à faire lire par les moyens de lecture une plage "en cours" du support, après présélection de celle-ci par l'usager, et
   . des moyens de programmation de séquence, permettant la saisie par l'usager d'une suite ordonnée de numéros de plages à lire, et le stockage de cette suite dans une zone formant mémoire de séquence(s) après sa validation par l'usager.

Une telle suite ordonnée de plages est habituellement appelée "programme".

Dans les dispositifs connus, la programmation d'une ou plusieurs suite(s) ordonnée(s) de plages ne peut être effectuée qu'en cas d'arrêt des moyens de lecture matérielle du support.

En d'autres termes, si l'on souhaite mémoriser une suite ordonnée de plages alors que l'on est en cours de lecture d'une plage donnée sur un disque donné (état dit actif), il faut dans un premier temps adresser aux moyens de lecture un ordre leur indiquant de passer de l'état actif de lecture à l'état passif (état dans lequel ils ne lisent pas), puis dans un second temps effectuer la programmation proprement dite.

D'autre part, lorsque l'on est en cours de lecture des plages d'un programme mémorisé, il n'est pas possible de modifier les plages dudit programme restant à lire. Une telle opération nécessite également l'arrêt des moyens de lecture, puis la programmation d'une nouvelle suite ordonnée ou la modification de l'ancienne suite préalablement mémorisée.

Par ailleurs, avec la plupart des lecteurs existants, destinés à lire une multiplicité de disques (double lecteurs, chargeurs horizontaux ou latéraux), le changement d'un disque en cours de lecture des plages d'un programme mémorisé entraîne l'arrêt immédiat des moyens de lecture.

De plus, dans tous les dispositifs actuels à chargeur simple ou multiple, une programmation ne peut être réalisée qu'à condition que les moyens de pilotage connaissent la ou les tables des matières du ou des disques chargés. En conséquence, dès qu'un nouveau disque est chargé cela entraîne l'invalidation d'une éventuelle programmation.

De tels inconvénients diminuent notablement le confort de l'usager et restreignent les fonctions de programmation.

En conséquence, un but de l'invention est de procurer un lecteur de supports d'informations numériques qui ne présente pas les inconvénients des lecteurs de la technique antérieure.

L'invention propose à cet effet un lecteur dans lequel, d'une part, les moyens de programmation de séquence sont séparés fonctionnellement des moyens de pilotage de lecture, et d'autre part, la mémoire des moyens de gestion de support, ainsi que la mémoire de séquence(s) sont conjointement accessibles aux moyens de programmation de séquence ainsi qu'aux moyens de pilotage de lecture, de sorte que les moyens de programmation de séquence peuvent en outre être rendus opératoires pendant le fonctionnement des moyens de pilotage de lecture, pour permettre de modifier le contenu de ladite mémoire de séquence, quel que soit l'état de connaissance des tables des matières.

La séparation fonctionnelle des unités de programmation et de pilotage de disque autorise leur indépendance de fonctionnement. Il est donc possible d'effectuer une programmation quel que soit l'état de fonctionnement des moyens de lecture pilotés par l'unité de pilotage.

De préférence, chaque élément de la suite ordonnée est mémorisé dans la mémoire de séquence sous forme d'un couple de données relatives au numéro d'une plage et au support qui la contient.

De façon particulièrement avantageuse, les moyens de programmation de séquence sont aptes, en cas de réception d'un ordre issu des moyens de pilotage de lecture et indiquant une ouverture d'un élément mobile permettant l'introduction ou l'extraction de l'un des supports désignés par une suite ordonnée mémorisée, à supprimer dans la mémoire de séquence l'ensemble des couples comportant des données relatives audit support accessible par ledit élément mobile ouvert. On entend par élément mobile aussi bien un tiroir de prise en charge de support, qu'un couvercle au moins partiellement amovible autorisant l'accès à un ou plusieurs supports.

Ainsi, en cas de remplacement d'un disque, soit dans un chargeur, soit sur un moyen de lecture, on procède automatiquement à la suppression dans le programme mémorisé de l'ensemble des couples désignant le support remplacé.

Selon une autre caractéristique de l'invention, les moyens de programmation de séquence sont aptes à stocker dans la mémoire de séquence une suite ordonnée de numéros de plages à lire formant programme, sans connaître le contenu des tables des matières des supports désignés par ladite suite ordonnée.

Par ailleurs, les moyens de programmation de séquence sont aptes, en cas de besoin de lecture d'une plage d'une suite ordonnée désignant un support dont la table des matières n'est pas connue, à comparer, après lecture de ladite table des matières, les données du ou des couples de ladite suite ordonnée désignant ledit support à ladite table des matières, et à supprimer dans la mémoire de séquence le ou les couples comportant des données incompatibles avec le contenu de ladite table des matières.

De la sorte, il n'est plus nécessaire de connaître la table des matières de chacun des disques contenant une plage d'un programme à lire. Désormais, lorsqu'une plage doit être lue sur un disque dont on ne connaît pas la table des matières, on commence par lire sa table, puis on teste la compatibilité de la plage programmée avec le contenu de la table. Si le test est concluant (plage présente sur le disque) on procède alors à la lecture de la plage du programme.

Selon une autre caractéristique de l'invention, les moyens de programmation de séquence comprennent en outre une mémoire auxiliaire destinée, en cas de programmation en cours de lecture d'une plage donnée d'un support, à mémoriser un couple de données relatives auxdits support et numéro de ladite plage donnée.

Cela permet de garder en mémoire le numéro de la plage qui est en cours de lecture avant le lancement du programme, ainsi que son support, de sorte qu'à la fin de ce programme, l'usager soit en mesure de finir d'écouter le disque qu'il écoutait initialement.

De plus, très avantageusement, les moyens de programmation de séquence sont aptes, en cas de réception d'un ordre issu des moyens de pilotage de lecture et indiquant un remplacement, en cours de lecture d'un programme, du support contenant la plage donnée mémorisée dans la mémoire auxiliaire, à remplacer dans ladite mémoire auxiliaire le couple de données relatives à ladite plage donnée par un nouveau couple de données de valeur nulle.

Ainsi, lorsqu'un disque est remplacé dans le lecteur, les moyens de commande peuvent savoir si le disque qui était en cours de lecture avant le début d'exécution du programme à été remplacé.

Selon une autre caractéristique de l'invention, les moyens de pilotage de lecture sont aptes, après lecture complète des plages d'une suite ordonnée et lorsque la mémoire auxiliaire contient des données de valeur non nulle, à faire lire une plage dont le numéro est celui stocké dans la mémoire auxiliaire, incrémenté d'une unité, et le support est celui stocké dans ladite mémoire auxiliaire.

De la sorte, à la fin d'un programme, il est possible, en allant lire le contenu de la mémoire auxiliaire, de reprendre automatiquement l'écoute du disque qui était en cours de lecture avant le lancement dudit programme. Cette fonction automatisée assure à l'usager un gain de temps très important puisque qu'elle l'affranchit d'une série d'ordres de commande. Elle permet également d'effectuer une lecture alternée entre un disque "maître" (à lecture non programmée) et un ou plusieurs autres disques programmés.

Selon l'invention, lorsque la mémoire auxiliaire contient des données de valeur nulle, les moyens de pilotage de lecture sont propres, après lecture complète des plages d'une suite ordonnée, à mettre les moyens de lecture dans leur état passif.

Lorsque les données contenues dans la mémoire auxiliaire sont nulles, cela veut dire que la programmation a été effectuée pendant que les moyens de lecture étaient dans leur état passif, ou bien que le disque qui était en cours de lecture avant l'exécution du programme a été remplacé. Dans ces deux cas, il n'y a donc pas lieu d'ordonner aux moyens de lecture de se mettre dans leur état actif, après exécution complète du programme.

Selon encore une autre caractéristique de l'invention, les moyens de programmation sont aptes, en cours de génération d'une suite ordonnée, à modifier et/ou supprimer et/ou ajouter, sur ordre de l'usager, au moins un couple de données relatives à un numéro de plage et à son support parmi les couples de ladite suite déjà mémorisées dans la mémoire de séquence.

De même, ces moyens de programmation sont aptes, en cours de lecture des plages d'un programme, à modifier et/ou supprimer et/ou ajouter, sur ordre de l'usager, au moins un couple de données relatives à un numéro de plage et à son support parmi les couples dudit programme mémorisé dans la mémoire de séquence.

L'usager peut donc réviser à tout moment, et cela quel que soit l'état des moyens de lecture, et que l'on soit en cours de lecture programmée ou non, la suite en cours de formation, ce qui évite de recommencer totalement la programmation en cours.

Cela renforce encore un peu plus la souplesse d'utilisation de la programmation. Désormais il est possible, en cas de programmation répétitive (ou en boucle), de modifier le contenu du programme qui doit être réutilisé.

Dans un mode de réalisation particulier des moyens de programmation, on prévoit la possibilité qu'ils puissent supprimer de la mémoire de séquence, sur ordre de l'usager, un couple de données d'une suite ordonnée en cours de lecture, dès la fin de lecture de la plage désignée par ledit couple de données, de sorte qu'il ne subsiste dans ladite suite ordonnée que les couples de données désignant les plages restant à lire.

Ainsi, la consultation des plages du programme qui restent à lire est notablement simplifiée, puisque à instant donné il ne subsiste dans la suite ordonnée que les plages qui n'ont pas encore été lues.

Bien entendu, cette fonction n'autorise pas une programmation en boucle, laquelle nécessite la conservation de l'ensemble des plages du programme.

De façon particulièrement avantageuse, les moyens de programmation sont aptes, après mémorisation d'un programme et en cas de reconnaissance de données de valeur non nulles dans la mémoire auxiliaire, à commander aux moyens de pilotage la lecture des plages dudit programme.

En revanche, après mémorisation d'un programme, et en cas de reconnaissance de données de valeur nulle dans la mémoire auxiliaire, les moyens de programmation sont aptes, à attendre un ordre de l'usager pour commander aux moyens de pilotage la lecture des plages dudit programme.

Ainsi, sur simple lecture des données contenues dans la mémoire auxiliaire, les moyens de programmation déterminent si le programme doit être lancé automatiquement dès la fin de saisie du programme, ou bien s'ils doivent attendre un ordre de l'usager pour effectuer ce lancement.

L'invention propose également un procédé de pilotage par programmation d'un lecteur de supports d'informations numériques, tel qu'un disque compact.

Ce procédé comprend :
- une première étape dans laquelle on effectue la saisie d'une suite ordonnée de couples de données relatives au numéro d'une plage et au support qui la contient, et le stockage de cette suite dans une zone formant mémoire de séquence, sans connaître au préalable la ou les tables des matières des supports des plages de la suite ordonnée,
- une seconde étape dans laquelle on lit la table des matières du support comportant la n-ième plage à lire de la suite ordonnée mémorisée,
- une troisième étape dans laquelle on compare le contenu de la table des matières du support comportant la n-ième plage de la suite ordonnée en cours de lecture, aux données des couples de cette suite ordonnée désignant ledit support, et on supprime dans la mémoire de séquence le ou les couples comportant des données incompatibles avec le contenu de ladite table des matières, et
- une quatrième étape dans laquelle, en fonction du résultat de la comparaison effectuée lors de la troisième étape, on procède soit à la lecture des informations stockées dans la n-ième plage, soit on retourne à la seconde étape, pour appliquer le procédé à la plage suivant la n-ième plage de la suite ordonnée à lire.

D'autres caractéristiques et avantages de l'invention apparaîtront à l'examen de la description détaillée qui va suivre, faite à titre d'exemple, et des dessins annexés, sur lesquels :
- la figure 1 est un schéma qui illustre une partie d'un lecteur selon l'invention;
- la figure 2 est un diagramme illustrant une procédure de programmation d'un lecteur selon l'invention; et
- la figure 3 est un diagramme illustrant l'étape 25 de la procédure illustrée figure 2.

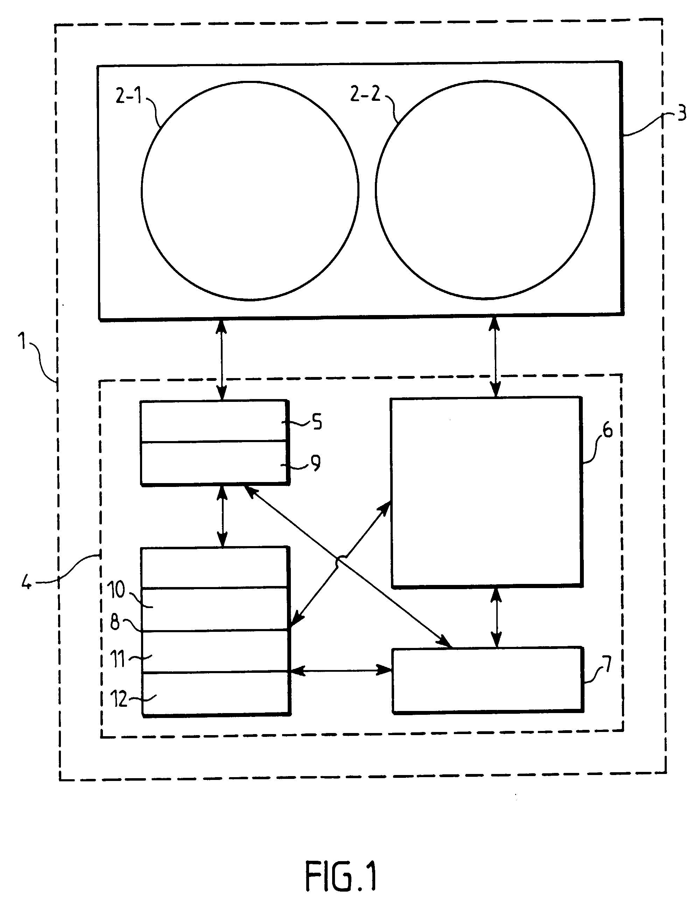

On se réfère tout d'abord à la figure 1 qui illustre schématiquement un lecteur 1 selon l'invention destiné à lire deux disques 2-1 et 2-2 placés sur des plateaux tourne-disques.

Bien entendu, l'invention s'applique également aux lecteurs destinés à lire un unique disque ou bien une pluralité de disques.

Chaque disque 2 comprend des informations de type numérique stockées dans des plages matérialisées sur l'une de ses faces et pouvant être détectées par l'unité de pilotage 6.

Le lecteur 1 comprend des moyens de lecture 3 de type diode laser, capables de lire les informations numériques stockées dans ces plages, ainsi que des moyens de commande 4 destinés à transcrire en signaux les ordres de l'usager. Ces ordres pourront être soient adressés aux moyens de commandes par activation de touches de commande situées sur la façade du lecteur 1, soient adressés par voie d'ondes à l'aide d'un boîtier de télécommande à distance.

Ces moyens de commande 4 sont réalisés à l'aide de composants électroniques que l'homme du métier peut acheter dans le commerce.

Ils comprennent une unité de gestion 5, une unité de pilotage de lecture 6, une unité de programmation de séquence 8 et une unité de saisie 7.

Il est clair que les différentes unités constituant les moyens de commande 4 du lecteur ne sont pas obligatoirement séparées physiquement. Il est donc possible d'envisager un unique microprocesseur multitâches ou quasi-multitâches regroupant lesdites unités.

L'unité de saisie 8 comprend les touches de fonction placées sur la façade du lecteur 1, ainsi que des moyens d'affichage de type diodes électroluminescentes, ou segments de cristaux liquides, permettant l'affichage d'informations relatives à l'état de fonctionnement du lecteur, au contenu des disques, et aux touches de fonction.

L'unité de pilotage 6 est conçue pour servir d'interface entre l'unité de saisie 8 et les moyens de lecture 3. Tout ordre saisi en façade (manuellement ou par voie d'ondes) est ainsi mis sous la forme d'un ou plusieurs signaux spécifiques propres à faire fonctionner les moyens de lecture 3, ou à réaliser une programmation à l'aide de l'unité de programmation 7, ou bien encore à dialoguer avec l'unité de gestion des disques 5.

L'unité de gestion 5 assure la gestion des plages de chaque disque 2. Elle comprend une mémoire de gestion 9 dans laquelle les moyens de commande 4 mémorisent les tables des matières de chacun des disques préalablement chargés sur les plateaux tourne-disque, et/ou dont une plage au moins a déjà été lue. Ces tables des matières contiennent des informations relatives au nombre de plages du disque (ou support), à leur durées respectives et à la durée total du disque.

Bien entendu, en cas d'enlèvement, ou de remplacement d'un disque, sa table des matières est effacée automatiquement de la mémoire de gestion 9.

L'unité de programmation 8 comprend une temporisation 10, une mémoire de séquence 11 et une mémoire auxiliaire 12.

Cette unité de programmation 8 est connectée d'une première part à l'unité de saisie 7 qui comprend des touches de fonction spécifiques à la programmation, d'une seconde part à l'unité de gestion 5, et plus spécifiquement à sa mémoire de gestion 9, ce qui lui permet d'accéder au contenu des tables des matières, et d'une troisième part à l'unité de pilotage de lecture 6.

Dans les lecteurs actuels, l'unité de programmation fait partie physiquement et fonctionnellement de l'unité de pilotage. Elle ne peut donc pas fonctionner indépendamment de celle-ci.

Or, en cours d'élaboration d'une suite ordonnée de couples de données formant programme, un couple de données, désignant une plage donnée et le support qui la contient, ne peut être accepté par l'unité de pilotage qu'à condition que ce couple soit compatible avec la table des matières du support désigné. Si tel n'est pas le cas, le couple saisi par l'usager est rejeté. Cela nécessite donc que toutes les tables des matières des supports désignés par les couples du programme soient stockés dans l'unité de gestion avant la saisie du programme.

Il en résulte que la programmation ne peut pas être effectuée, d'une part si les moyens de lecture sont dans leur état actif, puisque ceux-ci sont gérés par les moyens de pilotage, et d'autre part s'il y a incompatibilité entre l'un des couples à saisir et les tables des matières mémorisées.

En revanche, dans les lecteurs selon l'invention, bien que l'unité de programmation 8 et l'unité de pilotage 6 soient connectées l'une à l'autre, elles peuvent néanmoins fonctionner de façon indépendante l'une de l'autre.

Il est donc possible d'effectuer la saisie de couples de données sans que celles-ci soient compatibles avec les tables des matières mémorisées dans la mémoire de gestion 9, ou bien lorsque l'une au moins des tables n'est pas mémorisée.

On peut ainsi effectuer une programmation dynamique (en cours de lecture), mais également modifier en temps réel un programme alors que celui-ci est en cours d'exécution.

Bien entendu, un tel dispositif autorise la mémorisation d'une pluralité de programmes si besoin est, ainsi que leur modification.

Selon l'invention, la vérification de compatibilité d'un couple de données n'est plus effectuée lors de la saisie des couples de données du programme. Elle est désormais effectuée par l'unité de programmation 8 en cours d'exécution dudit programme, juste après la lecture du couple placé avant lui dans la suite ordonnée formant programme.

En fait, afin de gagner du temps, à chaque première occurrence d'un support (k) dans une suite ordonnée, l'unité de programmation 8 va voir dans la mémoire de gestion 9 si elle contient la table des matières du support concerné. Si ce n'est pas le cas, l'unité de programmation 8 demande à l'unité de pilotage 6 de faire lire la table des matières du support concerné par les moyens de lecture 3. Cette table est alors mémorisée dans la mémoire de gestion 9.

Connaissant la table des matières du support concerné, l'unité de programmation 8 procède à la vérification de tous les couples de données désignant le support concerné. Tout couple, de données désignant le support concerné, incompatible avec la table des matières du support concerné est alors automatiquement supprimé de la mémoire de séquence 10. L'exécution du programme se poursuit alors soit par la lecture de la plage désignée par le couple vérifié, soit par la vérification du couple suivant si celle-ci n'a pas déjà été faite.

Cette procédure de vérification sera décrite en détail plus loin.

La temporisation 12 est un compteur temporel qui se met en route automatiquement dès que la touche de fonction de programmation principale est activée, ou après chaque saisie d'un couple de données par l'usager.

Cette touche de fonction de programmation principale indique à l'unité de programmation 8 que l'usager souhaite commencer la saisie d'une suite ordonnée de plages afin de réaliser un programme de lecture. Elle génère donc un message de début de programmation qui est adressé à l'unité de programmation 8.

La durée du comptage est fixée lors de la fabrication du lecteur. Elle sera par exemple égale à 10 secondes.

Si aucune touche de fonction de programmation n'est activée pendant cette période de 10 secondes, l'unité de programmation 8 considère que la programmation est soit abandonnée par l'usager (si aucune saisie n'a été effectuée), et donc l'état en cours du lecteur n'est pas modifié, soit qu'il n'y a plus de couple de données à saisir, et par conséquent l'unité de programmation 8 insère après le dernier couple saisi un message de fin de programme.

La temporisation est matérialisée par un segment de cristaux liquides qui, dès l'activation de la touche de fonction de programmation principale, est mis dans un état dans lequel il clignote aux environs de cette touche de fonction de programmation principale. A la fin de la temporisation, si aucune autre touche de programmation n'a été validée, ce segment de cristaux liquides s'éteint définitivement si aucun couple n'a été choisi, ou bien il reste allumé en continu pour indiquer qu'un programme est mémorisé.

Cette touche principale servira également à modifier un programme après sa mémorisation.

La mémoire auxiliaire 12 permet de stocker un couple de données (n,m) représentatives de la plage (n) en cours de lecture et du disque (m) qui la contient au moment ou s'effectue la programmation. Si la programmation est effectuée pendant que les moyens de lecture 3 sont dans leur état passif, ou bien si le disque qui était en cours de lecture avant la saisie du programme est remplacé par un autre disque, le couple stocké est le couple (0,0).

Un tel aménagement permet au lecteur selon l'invention de fonctionner selon au moins deux modes différents, ce qui augmente très sensiblement le confort d'écoute de l'usager.

Dans un premier mode, après lecture de l'ensemble des plages d'un programme, l'unité de pilotage 6 ordonne aux moyens de lecture 3 de lire la plage (n+1) qui suit celle (n) qui a été mémorisée dans la mémoire auxiliaire 12. A cet effet l'unité de pilotage 6 est connectée à la mémoire auxiliaire 12.

Bien entendu si le contenu de cette mémoire est vide, il n'est pas fait appel aux moyens de lecture 3, lesquels sont placés par l'unité de pilotage 6 dans leur état passif.

Ce premier mode de fonctionnement assure donc le retour automatique des moyens de lecture 3 en position lecture, après exécution d'un programme.

Dans un second mode de fonctionnement, après lecture de l'ensemble des plages d'un programme, l'unité de pilotage 6 commande l'arrêt des moyens de lecture 3, laissant ainsi l'usager libre, soit de commander la lecture de n'importe quelle plage de l'un des disques, soit de retourner de façon semi-automatique à la plage qui suit celle qui a été mémorisée dans la mémoire auxiliaire 12.

Dans ce dernier cas, on prévoit une touche de fonction spécifique, en façade, permettant par simple activation un tel retour. Une telle touche demande à l'unité de pilotage 6 de lire le contenu de la mémoire auxiliaire 12, puis d'incrémenter d'une unité le numéro (n) associé à la plage stockée dans cette mémoire, afin d'ordonner aux moyens de lecture 3 de lire ladite plage correspondante (n+1).

On peut également prévoir une touche spécifique permettant le simple affichage des données stockées dans la mémoire auxiliaire 12.

Il est clair que l'on peut envisager des lecteurs équipés de circuits électroniques autorisant le premier et/ou le second mode de fonctionnement. En conséquence, dans l'hypothèse où le lecteur ne fonctionne que selon le premier mode, il ne sera pas nécessaire de l'équiper d'une touche spécifique assurant un retour totalement automatique.

En revanche, si l'on prévoit de coupler les premier et second modes, le lecteur doit être équipé d'une touche spécifique d'accès à chacun des deux modes. Ainsi, en fin de programmation, si l'on active cette touche spécifique on vérrouille le lecteur dans son second mode de fonctionnement, ce qui provoquera un retour tout automatique, tandis qu'en n'actionnant pas la touche spécifique, on vérrouille le lecteur dans son premier mode de fonctionnement.

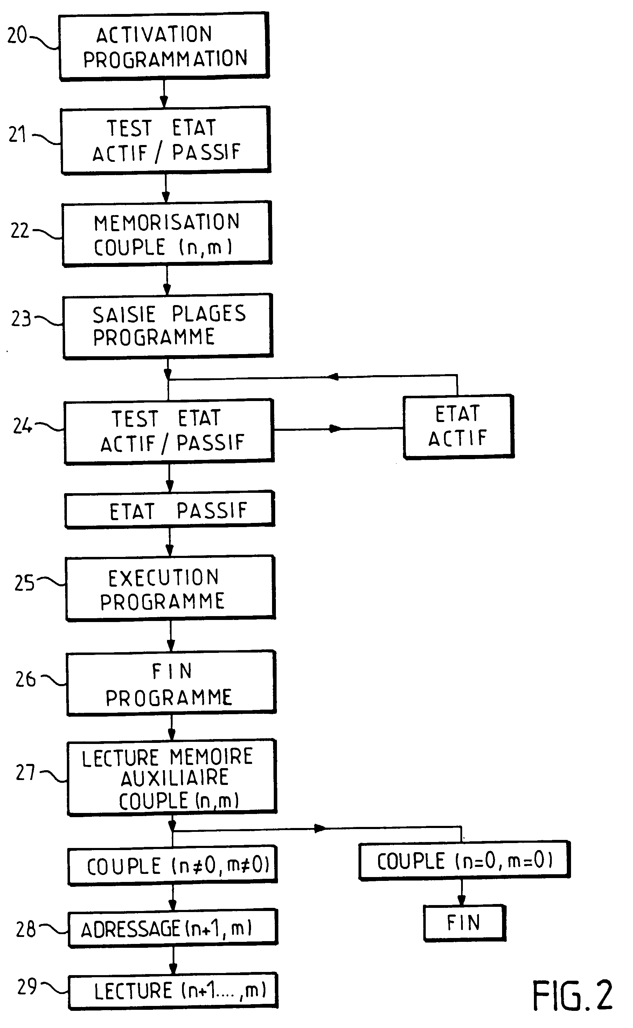

On se réfère maintenant à la figure 2 pour décrire plus en détail un mode de programmation possible d'un lecteur selon l'invention.

Dans l'étape 20, l'activation de la touche de fonction de programmation principale génère un message de début de programme qui est adressé à l'unité de programmation 8. Cela déclenche d'une part le comptage de la temporisation 11 et d'autre part la vérification à l'étape 21 de l'état de fonctionnement des moyens de lecture 3 par l'unité de pilotage 6, lequel état est soit actif (disque en cours de lecture), soit passif (moyens de lecture 3 hors de fonctionnement).

On passe alors à l'étape 22 dans laquelle l'unité de programmation 8 va lire le contenu de la mémoire 9 de l'unité de gestion 5, laquelle contient en temps réel le numéro de la plage en cours de lecture, ainsi que le disque qui la supporte. Ce contenu est alors mémorisé dans la mémoire auxiliaire 12 sous la forme d'un couple de données (n, m) représentatives du numéro (n) de la plage et du numéro (m) du disque contenant cette plage.

Si l'état des moyens de lecture 3 est actif, n et m sont différents de zéro. En revanche, si leur état est passif alors n égale m égale zéro.

On passe alors à l'étape 23 au cours de laquelle on génère la suite ordonnée.

Cette suite ordonnée formant programme est stockée dans la mémoire de séquence 10 de l'unité de programmation 8 sous la forme d'une succession de couples (j,k) de donnés représentatives d'un numéro de plage (j) et du disque correspondant (k), à l'image du couple (n,m) mémorisé dans la mémoire auxiliaire 12.

Ces couples de données peuvent être stockés sous toutes les formes connus de l'homme du métier, comme par exemple sous forme de suite de nombres binaires, ou de chaîne de caractères.

On passe ensuite à l'étape 24 dans laquelle on procède à une nouvelle vérification de l'état de fonctionnement des moyens de lecture 3, comme décrit ci-dessus à l'étape 21.

De nouveau, deux cas se présentent.

Si l'état des moyens de lecture 3 est actif, on attend la fin de la lecture de la plage en cours (n,m). Cette opération est réalisée par exemple en effectuant des interrogations successives jusqu'à obtention d'un signal indiquant que les moyens de lecture 3 sont dans leur état passif. Mais on peut également envisager d'attendre que l'unité de pilotage 6 adresse à l'unité de programmation 8 un signal de fin de plage. Les moyens de lecture 3 sont alors placés dans leur état passif.

Selon l'invention, lorsque l'état des moyens de lecture 3 est devenu passif, c'est à dire si le contenu de la mémoire auxiliaire comporte des données de valeurs non nulles, le programme est lancé automatiquement dès que sa saisie et sa mémorisation sont terminées. On passe alors à l'étape 25 au cours de laquelle on procède à l'exécution du programme mémorisé.

En revanche, lorsque l'état des moyens de lecture 3 est passif à l'étape 21, c'est à dire lorsque le contenu de la mémoire auxiliaire comporte des données de valeur nulle, l'unité de programmation est mise dans un état d'attente jusqu'à ce qu'elle reçoive de l'usager un ordre de lancement du programme qui vient d'être mémorisé. L'activation de n'importe laquelle des touches de commande situées sur la façade du lecteur déclenchera alors le lancement du programme à l'étape 25.

Bien entendu, on peut prévoir une touche de fonction spécifique autorisant le lancement d'un programme mémorisé.

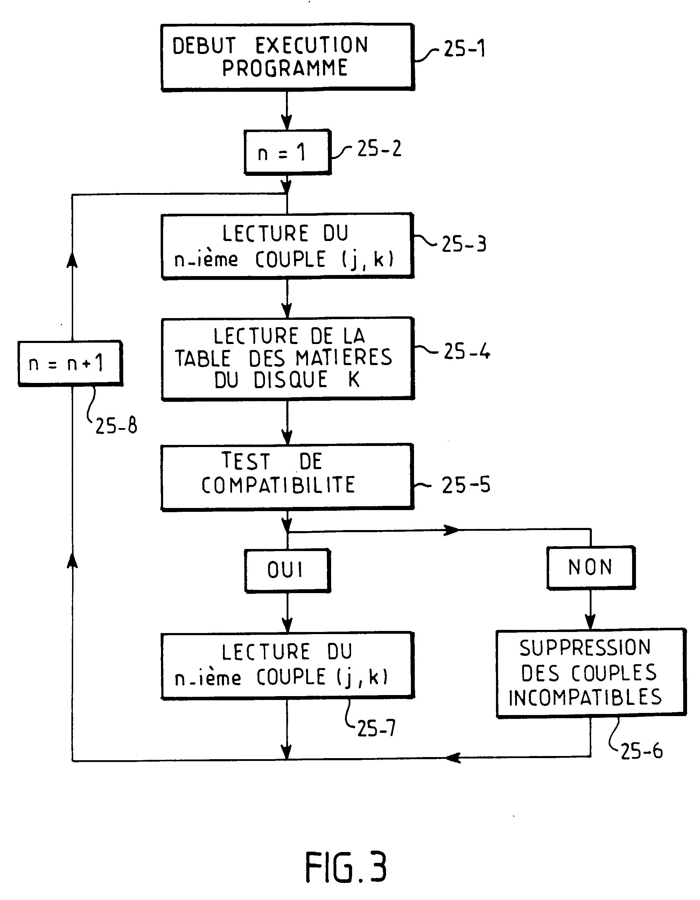

Pour décrire cette étape 25, on se réfère à la figure 3.

L'étape 25-1 marque le début de l'exécution du programme. A à l'étape 25-2, l'unité de programmation 8 établit à la valeur 1 un compteur de position indiquant la position du couple dans la suite ordonnée. Puis, lors de l'étape 25-3, elle va lire le contenu du premier couple (j,k) de la suite ordonnée, où j désigne le numéro d'une plage et k son support.

A l'étape 25-4, l'unité de programmation 8 va voir dans la mémoire de gestion 9 si elle contient la table des matières du support concerné (k). Si ce n'est pas le cas, l'unité de programmation 8 demande à l'unité de pilotage 6 de faire lire la table des matières du support concerné (k) par les moyens de lecture 3. Cette table est alors mémorisée dans la mémoire de gestion 9.

Connaissant la table des matières du support concerné, l'unité de programmation 8 procède à la vérification de tous les couples de données (x,k) désignant le support (k) concerné. Cela constitue l'étape 25-5.

Tout couple de données désignant le support.concerné (k), incompatible avec la table des matières de ce support concerné (k) est alors automatiquement supprimé de la suite ordonnée initialement mémorisée dans la mémoire de séquence 10, ce qui constitue l'étape 25-6.

L'exécution du programme se poursuit alors à l'étape 25-7, soit par la lecture de la plage (j) désignée par le couple vérifié (j,k), soit par la vérification du couple suivant, si celle-ci n'a pas déjà été faite, en retournant à l'étape 25-3, et après avoir incrémenté d'une unité le compteur de position, à l'étape 25-8.

Dans le premier cas, après lecture de la plage (j) désignée par le premier couple (j,k), on incrémente d'une unité le compteur de position lors de l'étape 25-8, ce qui ramène à l'étape 25-3, où l'on vérifie la compatibilité du second couple de données de la suite ordonnée (sauf si le support qu'elle désigne est le même que celui du couple précédent (k)). Dans ce cas, on effectue directement la lecture de la plage désignée, puis on passe au couple suivant, et ainsi de suite jusqu'à ce que la plage désignée par le dernier couple de la suite ordonnée soit lue.

Selon l'invention, l'exécution d'un programme peut être effectuée selon deux sous-modes.

Dans un premier sous-mode, l'unité de programmation gère la position des couples de données dans la suite ordonnée mémorisée, à l'aide d'un pointeur déplaçable. Au lancement du programme, le pointeur est positionné en regard du premier couple de la suite ordonnée. L'unité de programmation 8 adresse à l'unité de pilotage 6 le couple de données qui se trouve en regard du pointeur, ce qui permet à cette unité de pilotage 6 d'ordonner aux moyens de lecture 3 de lire la plage correspondant au couple de données reçus.

A la fin de la lecture de cette plage, l'unité de pilotage 6 adresse à l'unité de programmation 8 un message lui indiquant que l'on peut passer à la plage suivante de la suite ordonnée. Cela provoque automatiquement le déplacement du pointeur du premier couple vers le second couple de la suite ordonnée. L'unité de programmation 8 est alors en mesure d'adresser, après vérification de sa compatibilité, le second couple pointé à l'unité de pilotage 6, et l'opération de lecture/déplacement/vérification/adressage se reproduit jusqu'à ce que le pointeur arrive en regard du dernier couple de la suite ordonnée.

Dans un second sous-mode, les couples de la suite ordonnée sont positionnés les uns au dessus des autres afin de réaliser une pile. Au début de l'exécution du programme, un pointeur fixe est positionné au sommet de la pile en regard du premier couple de la suite ordonnée, ce qui permet à l'unité de programmation 8 d'adresser ce couple, après vérification de sa compatibilité, à l'unité de pilotage 6, afin qu'elle en ordonne la lecture. A la fin de la lecture de la plage, l'unité de pilotage 6 adresse à l'unité de programmation 8 un message lui indiquant qu'elle peut envoyer le second couple de la suite ordonnée. A réception de ce message, le couple qui était en regard du pointeur est effacé de la pile, et tout les couples suivants remontent d'une position dans la pile, le second couple se retrouvant désormais en regard du pointeur, ce qui permet à l'unité de programmation 8 d'adresser simplement à l'unité de pilotage ce nouveau couple, après vérification de sa compatibilité.

Dans ce second sous-mode, les couples d'une suite ordonnée d'un programme s'effacent donc au fur et à mesure de leur lecture. En conséquence, à la fin de l'exécution d'un programme, il n'est plus possible de récupérer le contenu dudit programme. Bien entendu, il est envisageable de prévoir une mémoire annexe permettant la mémorisation de la suite ordonnée initiale.

Quel que soit le sous-mode choisi, en fin d'exécution d'un programme, on passe à l'étape 26 dans laquelle l'unité de programmation 8 adresse à l'unité de pilotage 6 un message indiquant que le programme est fini.

Dans l'hypothèse où le lecteur ne peut fonctionner que dans le premier mode décrit précédemment (retour totalement automatique) l'unité de pilotage 6 va lire le contenu de la mémoire auxiliaire 12, ce qui constitue l'étape 27.

Le contenu de cette mémoire est le couple de données (n, m) ou n est le numéro de plage et m le numéro de disque.

Si n égale m égale zéro, cela veut dire que le programme qui vient d'être exécuté à été commencé alors que les moyens de lecture 3 était dans leur état passif, ou bien que le disque qui était en cours de lecture lors de la saisie du programme a été remplacé. La programmation est alors terminée. L'unité de programmation 8 adresse à l'unité de pilotage 6 un message lui indiquant de mettre les moyens de lecture 3 dans l'état passif.

Si n et m sont tous les deux différents de zéro, cela veut dire que le programme qui vient d'être exécuté a été commencé après lecture de la plage numéro n du disque numéro m.

L'unité de programmation 8 incrémente alors d'une unité le numéro n, lequel devient alors le numéro n + 1, ce qui constitue l'étape 28, puis dans l'étape 29 l'unité de programmation 8 adresse à l'unité de pilotage 6 un message lui demandant de positionner les moyens de lecture 3 au début de la plage n+1 du disque m afin qu'ils en lisent le contenu. La procédure de programmation est alors terminée et la lecture du disque m reprend à la plage n+1.

Il est clair que dans l'hypothèse où le lecteur ne peut fonctionner que dans le second mode de fonctionnement décrit ci-avant (retour semi-automatique), les étapes 27 à 29 n'ont plus lieu d'être.

Dans ce cas, la reprise de la lecture du disque m à partir de la plage n + 1 sera effectuée par activation d'une touche spécifique, comme décrit précédemment, laquelle touche assure à elle seule la réalisation des étapes 27 à 29.

Pendant l'étape 23 de saisie des plages d'un programme, il est possible, comme cela est connu, d'effectuer une sous-procédure de modification des plages déjà mémorisées, quel que soit l'état des moyens de lecture 3 (état actif ou passif).

Par ailleurs, grâce à l'indépendance de fonctionnement des unités de programmation 8 et de pilotage 6, il est également possible de modifier un programme mémorisé alors que celui-ci est en cours d'exécution.

Selon le sous-mode de fonctionnement choisi, ces modifications porteront soit sur l'une quelconque des plages du programme (premier sous-mode dans lequel les couples d'une suite ordonnée sont conservés intégralement dans la mémoire de séquence), soit seulement sur les plages du programme qui n'ont pas encore été lues (second sous-mode dans lequel les couples d'une suite ordonnée sont effacés au fur et à mesure de la lecture de la plage qui leur correspond).

Par ailleurs, si l'un des tiroirs qui comprend l'un des disques chargés désigné par l'un des couples d'un programme, est remplacé, cela entraîne automatiquement la suppression de la mémoire de séquence de l'ensemble des couples comportant une donnée désignant ce disque remplacé. Cette procédure automatique s'applique quel que soit l'état des moyens de lecture ou de l'unité de programmation. Elle s'applique donc en cours de programmation, en cours d'exécution d'un programme, ou en cours de lecture classique si un programme est mémorisé.

Enfin, les moyens de saisie 7 comprennent également une touche d'annulation logée sur la façade du lecteur 1 et connectée aux moyens de programmation 8 et propre à supprimer à tout moment un programme mémorisé ou les plages d'un programme en cours de lecture, interrompant ainsi un programme en cours d'exécution.

Il est clair que les procédures décrites précédemment sont données à titre d'exemple, et qu'elles pourront être adaptées par l'homme de l'art selon l'usage.

Par ailleurs, l'invention peut être appliquée à tout support d'informations numériques de type compact disque, audio et/ou vidéo, mais il est également envisageable de l'appliquer aux lecteurs de bandes magnétiques de type audio et/ou vidéo.

De même, dans la présente invention, le mot lecteur doit être compris dans son sens le plus large. Il couvre également les enregistreurs. En conséquence, la présente invention s'applique également à ces derniers.

## Revendications

1. Lecteur de supports d'informations numériques, tel qu'un disque compact (2), du type comprenant :
- des moyens de lecture matérielle du support (3),
- des moyens de commande (4) comprenant
. des moyens de gestion de support (5), propres à mémoriser des données lues formant "table des matières" identifiant l'ensemble des plages d'informations présentes sur au moins un support (2),
. des moyens de pilotage de lecture (6), propres à faire lire par les moyens de lecture (3) une plage "en cours" du support, après présélection de celle-ci par l'usager, et
. des moyens de programmation de séquence (8), permettant la saisie par l'usager d'une suite ordonnée de numéros de plages à lire, et le stockage de cette suite dans une zone formant mémoire de séquence (10) après sa validation par l'usager,
caractérisé en ce que les moyens de programmation de séquence (8) sont séparés fonctionnellement des moyens de pilotage de lecture (6), et
en ce que la mémoire (9) des moyens de gestion de support (5), ainsi que la mémoire de séquence (10) sont conjointement accessibles aux moyens de programmation de séquence (8) ainsi qu'aux moyens de pilotage de lecture (6), de sorte que les moyens de programmation de séquence (8) peuvent en outre être rendus opératoires pendant le fonctionnement des moyens de pilotage de lecture (6), pour permettre de modifier le contenu de ladite mémoire de séquence (10).

2. Lecteur selon la revendication 1, caractérisé en ce que la mémoire de séquence (10) est propre à mémoriser chaque élément de la suite ordonnée sous forme d'un couple de données relatives au numéro d'une plage et au support (2-i) qui la contient.

3. Lecteur selon la revendication 2, caractérisé en ce que les moyens de programmation de séquence (8) sont aptes, en cas de réception d'un ordre issu des moyens de pilotage de lecture (6) et indiquant une ouverture d'un élément mobile permettant l'introduction ou l'extraction de l'un des supports désignés par une suite ordonnée mémorisée, à supprimer dans la mémoire de séquence (12) l'ensemble des couples comportant des données relatives audit support accessible par ledit élément mobile ouvert.

4. Lecteur selon l'une des revendications 1 à 3, caractérisé en ce que les moyens de programmation de séquence (8) sont aptes à stocker dans la mémoire de séquence (10) une suite ordonnée de numéros de plages à lire formant programme, sans connaître le contenu des tables des matières des supports désignés par ladite suite ordonnée.

5. Lecteur selon la revendication 4, caractérisé en ce que les moyens de programmation de séquence (8) sont aptes, en cas de besoin de lecture d'une plage d'une suite ordonnée désignant un support dont la table des matières n'est pas connue, à comparer, après lecture de ladite table des matières, les données du ou des couples de ladite suite ordonnée désignant ledit support à ladite table des matières, et à supprimer dans la mémoire de séquence (12) le ou les couples comportant des données incompatibles avec le contenu de ladite table des matières.

6. Lecteur selon l'une des revendications 1 à 5, caractérisé en ce que les moyens de programmation de séquence (8) comprennent en outre une mémoire auxiliaire (12) destinée, en cas de programmation en cours de lecture d'une plage donnée d'un support, à mémoriser un couple de données relatives auxdits support et numéro de ladite plage donnée.

7. Lecteur selon la revendication 6, caractérisé en ce que les moyens de programmation de séquence (8) sont aptes, en cas de réception d'un ordre issu des moyens de pilotage de lecture (6) et indiquant un remplacement, en cours de lecture d'un programme, du support contenant la plage donnée mémorisée dans la mémoire auxiliaire (12), à remplacer dans ladite mémoire auxiliaire le couple de données relatives à ladite plage donnée par un nouveau couple de données de valeur nulle.

8. Lecteur selon l'une des revendications 6 et 7, caractérisé en ce que les moyens de pilotage de lecture (6) sont aptes, après lecture complète des plages d'une suite ordonnée et lorsque la mémoire auxiliaire (12) contient des données de valeur non nulle, à faire lire une plage dont le numéro est celui stocké dans la mémoire auxiliaire (12), incrémenté d'une unité, et le support est celui stocké dans ladite mémoire auxiliaire (12).

9. Lecteur selon l'une des revendications 6 et 7, caractérisé en ce que les moyens de pilotage de lecture (6) sont propres, après lecture complète des plages d'une suite ordonnée et lorsque la mémoire auxiliaire (12) contient des données de valeur nulle, à mettre les moyens de lecture (3) dans leur état passif.

10. Lecteur selon l'une des revendications 1 à 9, caractérisé en ce que les moyens de programmation (8) sont aptes, en cours de génération d'une suite ordonnée, à modifier et/ou supprimer et/ou ajouter, sur ordre de l'usager, au moins un couple de données relatives à un numéro de plage et à son support parmi les couples de ladite suite déjà mémorisés dans la mémoire de séquence (10).

11. Lecteur selon l'une des revendications précédentes, caractérisé en ce que les moyens de programmation (8) sont aptes, en cours de lecture des plages d'un programme, à modifier et/ou supprimer et/ou ajouter, sur ordre de l'usager, au moins un couple de données relatives à un numéro de plage et à son support parmi les couples dudit programme mémorisé dans la mémoire de séquence (10).

12. Lecteur selon l'une des revendications 1 à 11, caractérisé en ce que les moyens de programmation (8) sont propres à supprimer de la mémoire de séquence (10) un couple de données d'une suite ordonnée en cours de lecture, dès la fin de lecture de la plage désignée par ledit couple de données, de sorte qu'il ne subsiste dans ladite suite ordonnée que les couples de données désignant les plages restant à lire.

13. Lecteur selon l'une des revendications 6 à 12, caractérisé en ce que les moyens de programmation (8) sont aptes, après mémorisation d'un programme et en cas de reconnaissance de données de valeur non nulles dans la mémoire auxiliaire (12), à commander aux moyens de pilotage (6) la lecture des plages dudit programme.

14. Lecteur selon l'une des revendications 6 à 12, caractérisé en ce que les moyens de programmation (8) sont aptes, après mémorisation d'un programme et en cas de reconnaissance de données de valeur nulle dans la mémoire auxiliaire (12), à attendre un ordre de l'usager pour commander aux moyens de pilotage (6) la lecture des plages dudit programme.

15. Lecteur selon l'une des revendications précédentes, caractérisé en ce que les moyens de programmation (8) comprennent des moyens de temporisation (11) destinées à décompter une période temporelle prédéfinie après chaque saisie d'une plage d'une suite ordonnée et à générer un signal de fin de suite ordonnée en cas de dépassement dudit intervalle de temps sans nouvelle saisie de plage.

16. Lecteur selon l'une des revendication 1 à 15, caractérisé en ce que les moyens de saisie (7) comprennent une touche d'annulation connectée aux moyens de programmation (8) et propre à supprimer un programme mémorisé ou les plages dudit programme restant à lire.

17. Procédé de pilotage par programmation d'un lecteur de supports d'informations numériques, tel qu'un disque compact (2), caractérisé en ce qu'il comprend :
- une première étape dans laquelle on effectue la saisie d'une suite ordonnée de couples de données relatives au numéro d'une plage et au support qui la contient, et le stockage de cette suite dans une zone formant mémoire de séquence (10), sans connaître au préalable la ou les tables des matières des supports des plages de la suite ordonnée,
- une seconde étape dans laquelle on lit la table des matières du support comportant la n-ième plage à lire de la suite ordonnée mémorisée,
- une troisième étape dans laquelle on compare le contenu de la table des matières du support comportant la n-ième plage de la suite ordonnée en cours de lecture, aux données des couples de cette suite ordonnée désignant ledit support, et on supprime dans la mémoire de séquence (12) le ou les couples comportant des données incompatibles avec le contenu de ladite table des matières, et
- une quatrième étape dans laquelle, en fonction du résultat de la comparaison effectuée lors de la troisième étape, on procède soit à la lecture des informations stockées dans la n-ième plage, soit on retourne à la seconde étape, pour appliquer le procédé à la plage suivant la n-ième plage de la suite ordonnée à lire.
